# EUROPEAN PATENT SPECIFICATION

(11) **EP 2 245 837 B1**
(45) Date of publication and mention of the grant of the patent: **28.12.2011**
(21) Application number: 09710949.0
(22) Date of filing: 11.02.2009
(51) Int. Cl.: H04L 29/12

(54) **Dynamic DNS system for private networks**
Dynamisches DNS-System für private Netzwerke
Système de DNS dynamique pour réseaux privés

(30) Priority: 11.02.2008 US 27714
(43) Date of publication of application: 03.11.2010
(73) Proprietor: Dolby Laboratories Licensing Corporation, San Francisco, CA 94103-4813 (US)
(72) Inventor: BERNOSKY, Philip, J., San Francisco California 94103-4813 (US)
(74) Representative: Dendorfer, Claus
(86) International application number: PCT/US2009/033731
(87) International publication number: WO 2009/102746

(56) References cited:
- WO-A-02/35801
- WO-A-2007/086578
- US-A1- 2004 264 439

## Description

### RELATED APPLICATION

This Application claims priority to related co-pending Provisional U.S. Patent Application No. 61/027,714, filed on February 11, 2008, by Philip Bemosky, entitled "Internetworking Devices," and assigned to the assignee of the present invention (with Patent Docket No. D07050 US01).

### TECHNOLOGY

The present invention relates generally to networking. More specifically, embodiments of the present invention relate to internetworking devices.

### BACKGROUND

Networking technology and broadband network platforms are developing rapidly and becoming more pervasive. This milieu of connectivity may be used with emerging "connected" consumer and commercial electronics. As used in this context herein, the term "connected electronics" may refer to electronic devices that may both publish and consume digital content (such as encoded media) with other such devices, and from connected devices to the internet and other networks.

Document WO 2007/086578 A1 discloses an application of DDNS.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1 depicts information flow within a first example network structure, according to an embodiment of the present invention;

FIG. 2 depicts information flow with a second example network structure, according to an embodiment of the present invention; and

FIG. 3 depicts an example computer system platform, with which an embodiment of the present invention may be practiced.

### DESCRIPTION OF EXAMPLE EMBODIMENTS

Internetworking devices is described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

The invention is carried out by the appended claims.

### I.

### OVERVIEW

Example embodiments described herein relate to internetworking devices. A dynamic naming service (DNS) component functions privately in relation to a group of client devices, which are each associated with a unique universal resource locator (LJRL) that is maintained with the DNS component, which privately identifies the client devices within the group. The URL further identifies a hierarchy of private domains that is enforced within the group and which, at least implicitly, represents private relationships therein between the client devices. Network rules are applied over the group based on the private relationships or the private domains. The devices are securely authenticated within the group. A content sharing service component functions with the DNS component to allow one of the client devices within the group to access information content associated with another of the client devices based, at least partially, on the unique URL of the other client device. A private inter-network ("pnet") thus functions, at least a substantially similarly, to an Internet Protocol (IP) based network. The group is securely accessible to group client devices from a network that is external to the group. Moreover, each group client device is freely accessible to each of the other group client devices from within the group.

Embodiments may effectively reduce complexity that may be associated with installing and maintaining home networks, which some general consumers may find technically challenging. For instance, embodiments may obviate the configuration of routers and switches, modems (modulator/demodulators), gateways and the like with Dynamic Host Configuration Protocol (DHCP), IP addresses and Universal Plug and Play (UPnP). DHCP allocates IP addresses dynamically. Dynamic IP address allocation allows reuse (e.g., reassignment upon release) of IP addresses. UPnP allows seamless interconnectivity between some devices and other technologies. Moreover, embodiments readily allow connectivity between a consumer's devices that may be other than physically or logically proximate with respect to the pnet group. For example, group devices in use outside of a consumer's home, remote from an enterprise (or other entity's) locale, beyond the consumer's or enterprise firewall, or otherwise subject to perhaps increasingly impeding security and privacy measures may freely and securely access the pnet group. As used herein, the terms "group devices," "devices of the group," and the like may refer to client devices that comprise familial members of the pnet group.

An embodiment functions with IP, or a similar internet technology based paradigm, to connect devices within a private internet (pnet) and thus essentially obviates exposure of network complexity, while providing significant functionality. Embodiments thus allow access, by connected consumer or commercial electronic devices (e.g., devices that may both publish and consume digital content, such as encoded media, with other such devices, and from connected devices to the global internet and other networks), both inside and outside the home or enterprise, to internet services and to content stored across a group of other connected devices.

In a way that may be somewhat analogous to some functions of IP and other internet technologies that allow personal computers (PCs) to access websites via servers, an embodiment functions inherently globally and across various network topologies to interconnect the group of devices, access content from other group devices, and from the global internet and other networks. As used herein, the term "global internet" may refer to the large internetwork of various networks which, on a world wide scale, supports access to the World Wide Web (www). Thus, the term global internet may herein contrast with the pnet, which privately interconnects devices of the group.

Embodiments relate to establishing consumer or enterprise created "private internets" that may use technologies that are at least similar to those used with the global internet. However, embodiments relate to application of these "internet technologies" over a group of connected devices in a private internet. As used herein, the term "private internet" or pnet may refer to a closed internet type domain; a closed, private domain of private devices that freely interconnect using IP (or an essentially similar protocol).

An embodiment relates to a method of identity that inherently represents ownership and familial relationships. Thus, an embodiment simplifies sharing of content, which may be commercial and/or private information, between group devices of the pnet. Such content sharing may be referred to herein as "legitimate." While fully supporting legitimate content sharing within the pnet group however, the embodiment impedes the illegitimate (e.g., perhaps illegal or actionable) sharing of content.

An embodiment relates to a method of device and/or user authentication that significantly simplifies the interconnection of group devices. Moreover, an embodiment relates to a method of securely authenticating and connecting devices with the group from outside the local network, while freely allowing one group device to access another group device from within the pnet.

### II.

### EXAMPLE PRIVATE INTERNETWORKS

### A. EXAMPLE NETWORK FEATURES AND FUNCTIONS

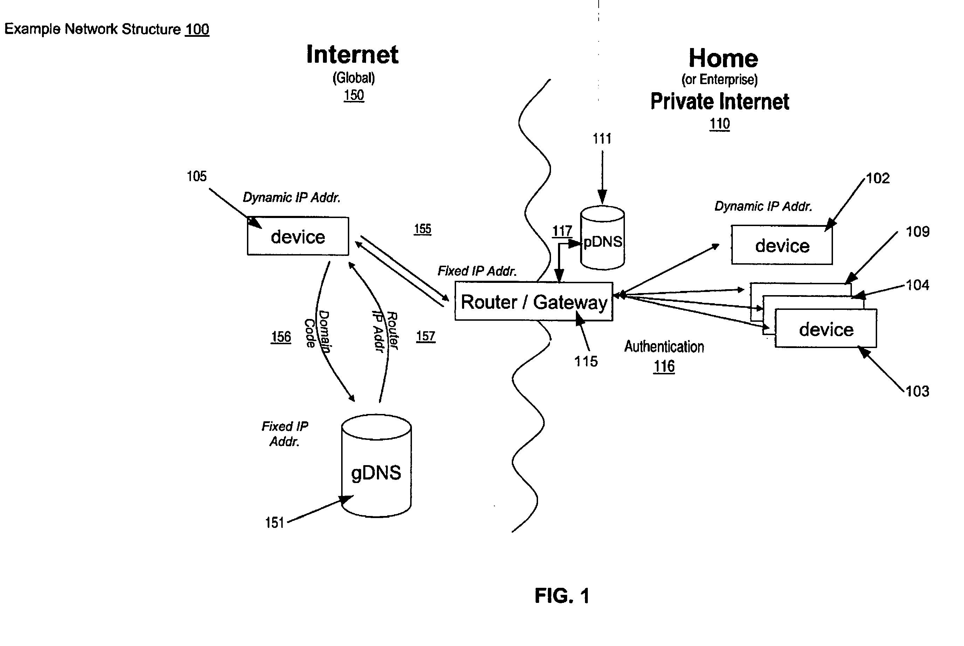

FIG. 1 depicts information flow within a first example network structure 100, according to an embodiment of the present invention. An embodiment relates to creating a "private internet" (pnet) 110 between a group of devices. The pnet 110 may be physically or logically proximate to a user's home or the locale of an enterprise or other entity associated with pnet 110. The pnet 110 may include virtually any number of devices, which are represented herein by the depicted devices 102, 103, 104, 105 and 109. As used herein, the term "group of devices" may refer to a family of consumer or commercial electronic devices. The term may further imply a relationship between the devices that may correspond to common, allied or entity based associations between one or more users of the devices. The pnet 100 may be considered a system for allowing each of its associated group devices to access one another and to access information content associated with each.

An embodiment uses methods that relate to IP or similar protocols and related technologies, such as those with which the global internet and world-wide web function. Thus, network setup and maintenance within the group may benefit from the familiarity, simplicity, and inherently global scope of internet based technology. Group devices each have a unique URL associated therewith, discover each other through DNS servers, and automatically and/or adaptively route information flow 100, both inside and outside the home or enterprise using methods that may be similar or analogous to those with which the global internet functions.

For instance, using the existing global internet as an illustration, URL and IP addresses allow various "domains" of the global internet to be expressed, rendered or described in natural language terms such as simple English. A URL associated with a certain domain may be resolved to an IP address that is unique on the global internet with a world-wide master directory function of a global DNS. The URL "http://www.dolby.com," "www.dolby.com," or "dolby.com", for example is associated through a global DNS with the IP address that corresponds to a webpage document, which is rendered in Hyper Text Markup Language (HTML) and is associated with a corporation entity known as "Dolby Laboratories, Inc.

When a user of the global internet enters such a natural language URL, e.g., enters appropriate text typed alphanumerically (or ideographically) into an browser input field, which itself may be appropriately configured with a graphical user interface (GUI), technology associated with the global internet resolves that URL to a specific server at a specific address on a specific network. Useful information may be accessed therefrom. The user experience is simple, effective, generally positive, seamless and transparent. For instance, while virtually all users may benefit from the convenience of retrieving information in this manner, many users may be substantially unaware of (nor consciously responsible for) the underlying technology that was used to return their document from the URL they entered.

An embodiment has a private DNS (pDNS) component 111. The pDNS component 101 may comprise a system, device or service that allows a user, consumer, enterprise or other entity associated with pnet 110 to create a private list of private group devices, including for example devices 102, 103, 104, 105 and 109. Each of the devices on the private list has a corresponding unique private URL (pURL). The pDNS component 111 maintains the private pURL list and provides information 117 relating to the pURLs of pnet 110 to a router/gateway (or similarly functional networking entity; e.g., switch) 115. While FIG. 1 depicts structure 100 as associated with dynamic IP addressing, it should be appreciated that embodiments are well suited to function with static IP addressing.

With queries to pDNS component 111 and correspondingly returned pURL information 117, router/gateway 115 performs translation and routing functions 116 that relate to authenticating and interconnecting the private devices, including example devices 102, 103, 104, 105 and 109. Device names and labels within the pnet may be easily assigned, read and understood by mainstream consumers and professionals, alike, because their nomenclature is substantially similar to that of the generally familiar URL, as used on global internet 150. Using IP like protocols, the underlying network technology operant within pnet 110 may not be apparent to a user's experience, but is efficiently and effectively used by router/gateway 115 in performing its routing and translation functions.

Moreover, the private nature of pDNS component 111 accords a measure of security. For instance, while router/gateway 115 functions to communicatively couple and network pnet 110 with the global internet 150 (and possibly other networks and internetworks), no IP address, URL, pURL or private IP address associated with pDNS component 111 or any of the private group devices are exposed over global internet 150.

A hierarchy of sub-domains is maintained within pnet 110. The sub-domains may represent ownership and relationships. For instance, a user family or other entity could choose a "root domain" name that is based on their last name. For a hypothetical example "Doe" family, users and devices associated with that group may be represented with the example pURL: http://doe.net. Potential conflicts with domain names on the global internet are substantially irrelevant. The private domain name relates to a private internet. The pnet may be substantially opaque from the perspective of the global internet and pURLs associated with the pnet may substantially invisible, undetectable or essentially meaningless thereto.

Members of the group, such as members of the hypothetical example Doe family herein, may access the pnet with which they are associated. Within the family or other group, sub-domains may be created. For the example, hypothetical users "Jane" and John" associated with the Doe family may respectively configure unique sub-domains, such as may conform to the hypothetical example pURLs: 'http://jane.doe.net' and 'http://john.doe.net'. While sub-domains may be unique, an implied familial relationship may be inferred from the "jane" and "john" sub-domains because they are both sub-domains that belong to the same "Doe" family domain.

Moreover, devices may also represent sub-domains. In the example of the hypothetical Doe family members, Jane may use a device such as an Ipod^{™} (a product line available from Apple Computers, a corporation in Cupertino, California) and John may use a device such as a Zune^{™} (a product line available with Microsoft, a corporation in Redland, Washington). These devices may respectively correspond to the hypothetical example pURLs: 'http://ipod.jane.doe.net' and 'http://zune.john.doe.net'. Ownership and familial relationships may be inferred between the devices as for instance, from the relationship to the root domain "doe.net," and personal domains (e.g., "john" and "jane").

### B. EXAMPLE SHARING AND SECURITY FEATURES

Content transfer rules may be enforced within pnet 100. Various content transfer rules may be enforced. Some transfer rules may be generally applicable within pnet 100. For example, a commercial or other provider or proprietary or copyright protected content may specify transfer rules that follow (or are otherwise associated with) particular content. A general content rule associated with a particular movie or musical album may specify a fair use policy applicable thereto, which would be applied generally within pnet 100 with respect to that particular content. The rule may allow transfer of that content from a device associated with a particular user to: (1) another device associated with only that user, (2) a certain number of times (e.g., thus asserting control of a number of instances of the content the user may transfer or duplicate), or (3) freely. It should be appreciated that the foregoing example merely represents general content transfer rules and that a variety of other generally applicable content transfer rules may be enforced within pnet 100.

Other transfer rules may be applicable with somewhat more specificity within pnet 100. For instance, within pnet 100, with its pDNS and pURL naming features, content stored on any of the group devices may be freely accessed from any of the other group devices. The content may be accessed, for instance, with a simple user input. The user input enters a pURL that specifies an appropriate device of the group, as well as content stored therewith that is desired for access. For example, a hypothetical pURL may specify a movie title, a video identifier, or another content designator stored with a specified device. For example, a hypothetical pURL: 'http://ipod.jane.doe.net/starwars.mp4' may specifically represent an example movie, encoded with the MPEG-4 codec and having the title "Starwars," located on an iPod^{™} device that belongs to (or is otherwise associated with) the example user Jane of the hypothetical Doe family.

The pDNS component 111 maintains the list of pURLs and functions with router/gateway 115 to resolve IP address and routing issues, which are internal with respect to pnet 110. Upon resolving the IP address and routing the request and information between an input group device (e.g., device 102) and a target device that corresponds to the entered pURL within pnet 110 (e.g., the pURL' http://ipod.jane.doe.net' may correspond to example device 103), the information specified with the pURL (e.g., 'starwars.mp4') is retrieved from target device 103 and returned to input device 102. Users of pnet 110 however, not unlike users of the global internet 150, may remain essentially unaware and unconcerned about the hidden technical complexities effectuating the retrieval of the information they desire from other group devices therein. Users of pnet 110, in contrast, may simply be pleased, relieved or convenienced by the experience, which should substantially resemble their familiar information retrieval experiences with the global internet 150. Router/gateway 115 may provide content sharing services between the group devices of pnet 110.

The pURL naming features and private IP addresses of pnet 110 effectuate security and privacy features therein that effectively "lock down" protected content within the network, while freely allowing access, retrieval and exchange of content between group devices thereof. Privacy and security are thus enhanced, while fair use and similar positive information exchange paradigms are fully supported. In an embodiment, the pURLs essentially represent a family (or similar or analogous) relationship between the group of devices. Networking logic associated with router/gateway 115 effectively restricts or enables a flow of content between devices based on their relationship within the hierarchy of domains and sub-domains.

For example, commercial content providers may specify that content they provide is allowed to be shared with (e.g., stored on) any device that is owned by a single person. Additionally or alternatively, content providers may specify that content they provide is allowed to be shared with any device owned within a family. Such specifications may be enforced with rules that are germane to pnet 110 and easily managed by network logic within the domain, e.g., with which router/gateway 115 functions in view of information 117. Private content may be allowed, by the network logic operant within pnet 100, for sharing and transfer between any devices within the family. Moreover, some content may be allowed for sharing with other family domains, while the other domains may be restricted from sharing content beyond a personal domain associated with their own corresponding pnet.

### C. EXAMPLE CONNECTIVITY FEATURES

Embodiments may also simplify user connectivity within pnet 100 upon establishing devices within the private domain. For instance, upon purchases or acquisition of a new device for inclusion in their pnet 100, users may simply initialize or power the device on to effectuate connectivity (e.g., establish communicative and networking coupling of the device) within the personal network. In an embodiment, an initializing device requests a pURL corresponding to its owner (e.g., for the hypothetical user "John Doe," use of the correspondingly appropriate pURL 'john.doe.net') may effectuate connectivity. The device contacts the pDNS component (e.g., server) 111, which requests authentication.

Authentication may be effectuated with password entry, biometric conformance, challenge interrogatory replies, other responsive mechanisms, or other means. Upon authentication, the pDNS component may assign or maintain a unique pURL that corresponds to the device. For example, hypothetical user John Doe's third iPod^{™} device, upon authentication in pnet 110, may be associated with the example pURL: 'ipod3.john.doe.net'.

An authenticated assignment securely establishes a private IP address and associated routing information within a database (or other DNS information repository) associated with pDNS component 111. Thus, the initialized device attains access the DNS database of pDNS server 111 and may use information retrieved therefrom to discover related devices within pnet 100. Concomitantly, router/gateway 115 may provide or use associated routing information to handle communications traffic between the authenticated initialized device and the other devices of pnet 110.

Thus, embodiments may effectively utilize well established URL identification paradigms. For instance, an embodiment may function in substantial compliance or conformance with available OpenID internet specifications, such as those that may be promulgated in various requests for comment (RFC) of the Internet Engineering Task Force (IETF), to effectuate the formation and specification of relationships through essentially private URL sub-domains, as designated with the pURLs.

An embodiment implements identity, at least initially, at the root domain. For example, the root domain in the hypothetical pURLs herein is the syntax corresponding to the 'doe.net' portion of the pURL (the '.net' syntax corresponding to that which is sometimes referred to as a "top level," "first level," or "'primary' domain name"). Devices seeking to gain authentication into the private network 'doe.net' domain may simply derive the authentication address from the root domain. For instance, the pnet 100 private domain may implement OpenID identity over the pURL 'openid.doe.net'. Thus, devices seeking authentication in pnet 110 may simply refer to that particular pURL. Upon authenticating into the pnet 110 domain, the initializing device may freely gain connectivity to the other devices thereof.

### D. EXAMPLE PRIVATE INTERNET ACCESS VIA EXTERNAL NETWORKS

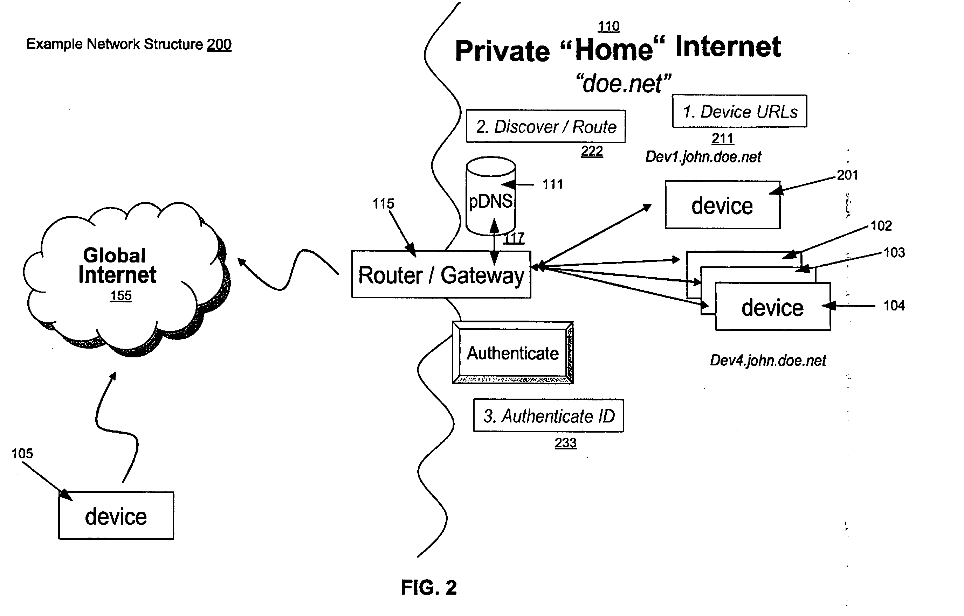

FIG. 2 depicts information flow within second example network structure 200, according to an embodiment of the present invention. Group devices may securely connect to the private internet from a physical or logical locale other than proximate thereto. For instance, group device 105 may connect to pnet 100 from outside its local network and/or outside the home, enterprise or other entity hosting, deploying or otherwise associated with pnet 100. Group devices external to pnet 100 may connect therewith via an external network, which may include the global internet 155.

An embodiment effectuates connection of externally disposed group devices (e.g., device 105) for accessing the private domain. Device 105 authenticates with the pDNS 111 identity server via global internet 155 and router/gateway 115, and essentially proxies into the local network of pnet 100. Alternatively or additionally, device 105 may proxy into pnet 100 via direct or intermediate connection with another group device of the "doe.net" family of devices that is also physically or logically situated external to pnet 100, but is already communicatively coupled and authenticated into its local network. For example, device 105 may communicatively couple with another group device that, while also external to pnet 100, is already connected (communicatively coupled and authenticated) thereto via global internet 155 and router/gateway 115.

An embodiment may use two sets of unique codes, for use as secure, distinct identifiers. The unique codes or identifiers may include randomly generated code, hash codes, digital certificates, and cryptographic key exchange modalities. For instance, key exchange procedures may be implemented, at least in part, per one or more of the IPsec (Internet Protocol Security) IKE (Internet Key Exchange), ISAKMP (Internet Security Association and Key Management Protocol) and/or related internet standards and protocols. An embodiment may use various methods for generating unique identifiers.

In an embodiment, a domain code is generated and/or assigned upon creating the private root domain (e.g., the 'doe.net' root domain). The domain code may be both unique from a global perspective and specific to the private domain associated with pnet 100. Multiple private domains may exist that have the same natural language root domain designation. For example, more than one domain (perhaps many) may share the same root domain identifier "doe.net." Notwithstanding this apparent, yet essentially superficial similarity however, each private internet domain corresponds to a globally unique domain code. Importantly, the unique domain codes allow the private internet domains to be distinguished and differentiated one from another from outside of their respective private domains.

An embodiment generates a second set of codes for each group device. For instance, upon authenticating a new device into pnet 110, "device specific code" is created and/or assigned that specifically corresponds to the authenticating device and that is unique within the private domain. Importantly, the domain code combined with the device specific code represent an identifier for a given group device that maintains its unique specificity globally, e.g., from the perspective of users and devices in other networks external to pnet 100 and from the global internet 155.

Thus, group devices, while other than physically or logically proximate to, or within the boundaries of the local network hosting pnet 110 may securely connect thereto via global internet 155. Myriad external locales exist from which a "Doe family" user (or member of an enterprise or other entity that may similarly be considered in a familial or relatedness context) may attempt to connect with pnet 110. The global internet 155 may be accessed, for example, from coffee shops, pubs, a consumer's place of business, a friend's house, public transport modes and hubs. Via the public global internet 155, pnet 110 may be securely accessed from any of its externally disposed group devices.

Embodiments simplify authentication and connectivity, which could otherwise be complicated by consumer broadband issues, such as the dynamic nature of IP addresses that may apply to the consumer's home, the existence of firewalls and other security strictures and structures, and network address translation within a consumer's router.
Embodiments thus provide a dynamic system for contacting the private internet, authenticating and communicating and exchanging information therewith notwithstanding such issues.

An embodiment effectuates an internet service for resolving the domain code described herein to a private IP address of the relevant private DNS network (e.g., pnet 100). For instance, pDNS server 111 occasionally, periodically, or responsively contacts dynamic global DNS service 151 (FIG. 1) associated with global internet 155 and ensures that current global IP addresses, needed for global contacting private internets, are available. Importantly, embodiments use the essentially hidden domain code to address the private domain of pnet 110. The domain code effectively hides the private domain name ('doe.net') from the public dynamic global DNS service 151, thus providing an additional layer of security. While FIG. 2 depicts structure 200 as associated with dynamic IP addressing, it should be appreciated that embodiments are well suited to function with static IP addressing.

Upon discovering the global IP address of the user's private domain pnet 100, the private, external group device 105 may contact the user's pDNS server 111 (e.g., via global internet 155 and router/gateway 115) to authenticate and ultimately gain access to the local network through proxy functions provided by pDNS 111. In an embodiment, authenticating device 105 uses both the domain code and the device specific code, e.g., the domain name ('doe.net') and the authenticating password or other security mechanism. Defense in depth is accorded by several layers of security, which may deter hackers, content thieves and other black hats, network rogues and modern day malefactors.

Importantly, the referral mechanism used with embodiments herein maintains authentication as a function of components of the private pnet 100 domain. This limits exposure of other identity and authentication data to the overall global internet 155. While the domain code may be exposed to global internet 155, the domain name ('doe.net'), group device names and group device codes remain private and essentially hidden. Thus, the group device names and group device codes required for authentication and access are not exposed or available on global internet 155.

Within network structure 200, a procedure for interconnecting group devices may thus operate. In step 211, pURLs associated with each of the group devices are generated. For example, hypothetical pURL'Dev1.john.doe.net' may correspond to group device 201 and pURL 'Dev4.john.doe.net' may correspond to group device 104. Upon external group device 105 attempting to connect with pnet 100 to access information associated with group devices 201, 102, 103 or 104 using the domain code, its group membership is discovered and private routing information privately derived or retrieved within pnet 110 in step 222. In step 233, device 105 is authenticated with its own device code, which may be encrypted. Upon authentication, device 105 may freely function within pnet 110, although it may remain physically of logically other than proximate thereto and may securely access information associated with the other group devices 201, 102, 103 and 104.

### III.

### EXAMPLE COMPUTER SYSTEM PLATFORM

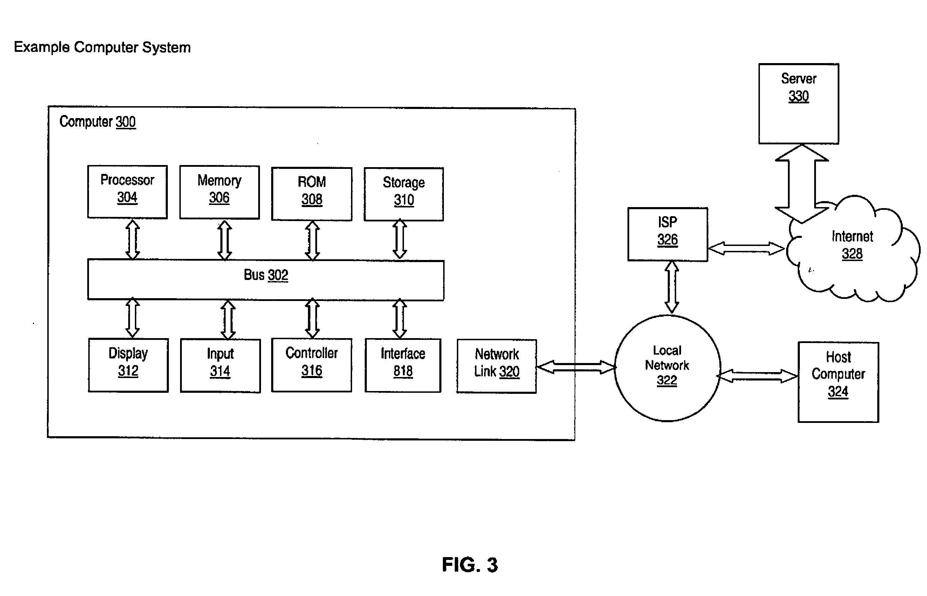

FIG. 3 depicts an example computer system platform 300, with which an embodiment of the present invention may be implemented. Computer system 300 includes a bus 302 or other communication mechanism for communicating information, and a processor 304 coupled with bus 302 for processing information. Computer system 300 also includes a main memory 306, such as a random access memory (RAM) or other dynamic storage device, coupled to bus 302 for storing information and instructions to be executed by processor 304. Main memory 306 also may be used for storing temporary variables or other intermediate information during execution of instructions to be executed by processor 304. Computer system 300 further includes a read only memory (ROM) 308 or other static storage device coupled to bus 302 for storing static information and instructions for processor 304. A storage device 310, such as a magnetic disk or optical disk, is provided and coupled to bus 302 for storing information and instructions.

Computer system 300 may be coupled via bus 302 to a display 312, such as a liquid crystal display (LCD), cathode ray tube (CRT) or the like, for displaying information to a computer user. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane.

The invention is related to the use of computer system 300 for associating information with media content. According to one embodiment of the invention, internetworking devices is provided by computer system 300 in response to processor 304 executing one or more sequences of one or more instructions contained in main memory 306. Such instructions may be read into main memory 306 from another computer-readable medium, such as storage device 310. Execution of the sequences of instructions contained in main memory 306 causes processor 304 to perform the process steps described herein. One or more processors in a multi-processing arrangement may also be employed to execute the sequences of instructions contained in main memory 306. In alternative embodiments, hardwired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 304 for execution. Such a medium may take many forms, including but not limited to, non-volatile media, volatile media, and transmission media. Non-volatile media includes, for example, optical or magnetic disks, such as storage device 310. Volatile media includes dynamic memory, such as main memory 306. Transmission media includes coaxial cables, copper wire and other conductors and fiber optics, including the wires that comprise bus 302. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other legacy or other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 304 for execution. For example, the instructions may initially be carried on a magnetic disk of a remote computer. The remote computer can load the instructions into its dynamic memory and send the instructions over a telephone line using a modem. A modem local to computer system 300 can receive the data on the telephone line and use an infrared transmitter to convert the data to an infrared signal. An infrared detector coupled to bus 302 can receive the data carried in the infrared signal and place the data on bus 302. Bus 302 carries the data to main memory 306, from which processor 304 retrieves and executes the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card or a digital subscriber line (DSL), cable or other modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 sends and receives electrical, electromagnetic or optical signals that carry digital data streams representing various types of information.

Network link 320 typically provides data communication through one or more networks to other data devices. For example, network link 320 may provide a connection through local network 322 to a host computer 324 or to data equipment operated by an Internet Service Provider (ISP) 326 (e.g., for the global internet 155; FIG. 1, 2). ISP 326 in turn provides data communication services through the worldwide packet data communication network now commonly referred to as the "Internet" 328 (e.g., which may be identified with or represent global internet 155; FIG. 1, 2). Local network 322 and Global Internet 328 both use electrical, electromagnetic or optical signals that carry digital data streams. The private internet described herein (e.g., pnet 110; FIG. 1, 2) may also use such signals. The signals through the various networks and the signals on network link 320 and through communication interface 318, which carry the digital data to and from computer system 300, are exemplary forms of carrier waves transporting the information.

Computer system 300 can send messages and receive data, including program code, through the network(s), network link 320 and communication interface 318. In the Global Internet example, a server 330 might transmit a requested code for an application program through Global Internet 328, ISP 326, local network 322 and communication interface 318. In accordance with the invention, one such downloaded application provides for internetworking devices, as described herein.

The received code may be executed by processor 304 as it is received, and/or stored in storage device 310, or other non-volatile storage for later execution. In this manner, computer system 300 may obtain application code in the form of a carrier wave.

Computer system 300 may represent various computers, computerized communicating and networking devices, entertainment, media reproduction, and gaming devices, and other electronic and digital apparatus. Computer system 300 may thus represent a personal computer (PC) and similar computers (workstations, Apple^{™} and Linux based computers) of various types, portability characteristics and form factors that may include (but are not limited to) desktops, laptops, handhelds, personal digital assistants (PDAs), cellular telephones, media (e.g., MP3 and/or other codecs or formats) players, game related devices and the like.

While embodiments have been described in relation to effectuation with a computer system, it should be appreciated that embodiments may also be implemented with circuits and devices such as an integrated circuit (IC). Embodiments may function with ICs that include (but not limited to) an application specific IC (ASIC), a microcontroller, a field programmable gate array (FPGA) or a programmable logic device (PLD). Internetworking functionality associated with embodiments may accrue to aspects of the structure and design of devices such as ASICs. Alternatively or additionally, internetworking functionality may be effectuated with programming instructions, logic states, and/or logical gate configurations applied to programmable ICs, such as microcontrollers, PLDs and FPGAs.

## Claims

1. A system, comprising:
a domain naming service component (111) that functions privately in relation to a group of client devices (102, 103, 104, 109), which are each associated with a unique universal resource locator maintained with the domain naming service component that privately identifies each of the client devices within the group;
wherein the universal resource locator further identifies a hierarchy of private domains that is enforced within the group and which, at least implicitly, represents private relationships therein between the client devices;
wherein network rules are applied over the group based on one or more of the private relationships or the private domains; and
wherein each of the client devices is securely authenticated within the group; and
**characterized by**
a content sharing service component that functions with the domain naming service component to allow at least a first of the client devices within the group to access information content associated with at least a second of the client devices of the group based, at least in part, on the unique universal resource locator of the at least second of the client devices of the group;
wherein content associated with each of the devices that is privately generated with respect to the group is freely transferable between each of the devices of the group; and
wherein content that is generated other than privately with respect to the group devices is transferable within the group according to content access rules associated therewith.

2. The system as recited in Claim 1 wherein the system comprises a private internetwork that functions according to the Internet Protocol.

3. The system as recited in Claim 1 wherein the group is securely accessible to the client devices from a network that is external to the group.

4. The system as recited in Claim 1 wherein each client device of the group is freely accessible to each of the other client devices from within the group.

5. The system as recited in Claim 1 wherein the universal resource locator further identifies the information content associated with each of the client devices of group.

6. A method, comprising the steps of:
maintaining, with a domain naming service component (111) that functions privately in relation to a group of client devices, a unique universal resource locator that privately identifies each of the client devices (102, 103, 104, 109) within the group;
identifying, with the universal resource locator, a hierarchy of private domains that is enforced within the group and which, at least implicitly, represents private relationships therein between the client devices of the group;
wherein network rules are applied over the group based on one or more of the private relationships or the private domains; and
wherein each of the client devices is securely authenticated within the group; and
**characterized by**
allowing, with a content sharing service component that functions with the domain naming service component, at least a first of the client devices of the group to access information content associated with at least a second of the client devices of the group based, at least in part, on the unique universal resource locator of the at least second of the client devices of the group;
wherein content associated with each of the devices that is privately generated with respect to the group is freely transferable between each of the devices of the group; and
wherein content that is generated other than privately with respect to the group devices is transferable within the group according to content access rules associated therewith.

7. A computer readable storage medium comprising instructions which, when executed with one or more processors of one or more computers:
configure a system as recited in any of Claims 1-5; or
cause or control the one or more computers to perform a process that relates to a method as recited in Claim 6.

8. A use for a computer system, comprising:
configuring a system as recited in any of Claims 1-5; or
performing a process that relates to a method as recited in Claim 6.

## Patentansprüche

1. System aufweisend:
eine Domain-Namensgebungsdienst-Komponente (111), die in privater Weise bezogen auf eine Gruppe von Client-Geräten (102, 103, 104, 109) arbeitet, denen jeweils ein eindeutiger universeller Bezeichner für Ressourcen (*unique universal resource locator*) zugeordnet ist, der bei der Domain-Namensgebungsdienst-Komponente gepflegt wird, und der jedes der Client-Geräte innerhalb der Gruppe privat identifiziert;
wobei der universelle Bezeichner für Ressourcen weiter eine Hierarchie privater Domains identifiziert, die innerhalb der Gruppe durchgesetzt wird und die, zumindest implizit, private Beziehungen in dieser zwischen den Client-Geräten repräsentiert;
wobei Netzwerkregeln basierend auf einer oder mehreren der privaten Beziehungen oder der privaten Domains für die Gruppe angewendet werden; und
wobei jedes der Client-Geräte innerhalb der Gruppe sicher authentifiziert wird; und
**gekennzeichnet durch**
eine Inhaltgemeinschaftsnutzungsdienst-Komponente, die mit der Domain-Namensgebungsdienst-Komponente arbeitet, um zu ermöglichen, dass zumindest ein erstes der Client-Geräte innerhalb der Gruppe auf Informationsinhalt zugreift, der zumindest einem zweiten der Client-Geräte der Gruppe zugehörig ist, und zwar, zumindest teilweise, basierend auf dem eindeutigen universellen Bezeichner für Ressourcen zumindest des zweiten der Client-Geräte der Gruppe;
wobei Inhalt, der jedem der Geräte zugehörig ist und der bezogen auf die Gruppe privat erzeugt wurde, zwischen jedem der Geräte der Gruppe frei übertragen werden kann; und
wobei Inhalt, der bezogen auf die Gruppen-Geräte anders als privat erzeugt wurde, innerhalb der Gruppe gemäß zugehörigen Inhaltszugriffsregeln übertragen werden kann.

2. System nach Anspruch 1, wobei das System ein privates Internetzwerk aufweist, das gemäß dem Internet-Protokoll arbeitet.

3. System nach Anspruch 1, wobei die Client-Geräte sicher auf die Gruppe zuzugreifen vermögen, und zwar von einem zur Gruppe externen Netzwerk aus.

4. System nach Anspruch 1, wobei jedes Client-Gerät der Gruppe frei zugreifbar für jedes der anderen Client-Geräte von innerhalb der Gruppe ist.

5. System nach Anspruch 1, wobei der universelle Bezeichner für Ressourcen weiter den Informationsinhalt identifiziert, der jedem der Client-Geräte der Gruppe zugehörig ist.

6. Verfahren, das die Schritte umfasst:
es wird mit einer Domain-Namensgebungsdienst-Komponente (111), die in privater Weise bezogen auf eine Gruppe von Client-Geräten arbeitet, ein eindeutiger universeller Bezeichner für Ressourcen gepflegt, der jedes der Client-Geräte (102, 103, 104, 109) in der Gruppe privat identifiziert;
es wird mit dem universellen Bezeichner für Ressourcen eine Hierarchie privater Domains identifiziert, die innerhalb der Gruppe durchgesetzt wird und die, zumindest implizit, private Beziehungen in dieser zwischen den Client-Geräten der Gruppe repräsentiert;
wobei Netzwerkregeln basierend auf einer oder mehreren der privaten Beziehungen oder der privaten Domains für die Gruppe angewendet werden; und
wobei jedes der Client-Geräte innerhalb der Gruppe sicher authentifiziert wird; und
**gekennzeichnet durch**
es wird mit einer Inhaltgemeinschaftsnutzungsdienst-Komponente, die mit der Domain-Namensgebungsdienst-Komponente arbeitet, ermöglicht, dass zumindest ein erstes der Client-Geräte der Gruppe auf Informationsinhalt zugreift, der zumindest einem zweiten der Client-Geräte der Gruppe zugehörig ist, und zwar, zumindest teilweise, basierend auf dem eindeutigen universellen Bezeichner für Ressourcen des zumindest zweiten der Client-Geräte der Gruppe;
wobei Inhalt, der jedem der Geräte zugehörig ist und der bezogen auf die Gruppe privat erzeugt wurde, zwischen jedem der Geräte der Gruppe frei übertragen werden kann; und
wobei Inhalt, der bezogen auf die Gruppen-Geräte anders als privat erzeugt wurde, innerhalb der Gruppe gemäß zugehörigen Inhaltszugriffsregeln übertragen werden kann.

7. Computerlesbares Speichermedium, das Anweisungen beinhaltet, die, wenn sie mit einem oder mehreren Prozessoren eines oder mehrerer Computer ausgeführt werden:
ein System nach einem der Ansprüche 1 - 5 konfigurieren; oder
bewirken oder steuern, dass der eine oder die mehreren Computer einen Prozess durchführen, der ein Verfahren nach Anspruch 6 betrifft.

8. Verwendung für ein Computersystem, beinhaltend:
Konfigurieren eines Systems nach einem der Ansprüche 1 - 5; oder
Durchführen eines Prozesses, der ein Verfahren nach Anspruch 6 betrifft.

## Revendications

1. Système, comprenant :
un composant de service de noms de domaine (111) qui fonctionne de façon privée relativement à un groupe de dispositifs clients (102, 103, 104, 109), qui sont chacun associés à un localisateur universel de ressources unique maintenu avec le composant de service de noms de domaine qui identifie de façon privée chacun des dispositifs clients au sein du groupe ;
dans lequel le localisateur universel de ressources identifie en outre une hiérarchie de domaines privés qui est appliquée au sein du groupe et qui, du moins implicitement, représente des relations privées à l'intérieur entre les dispositifs clients ;
dans lequel des règles de réseau sont appliquées sur le groupe sur la base d'un ou plusieurs des relations privées ou des domaines privés ; et
dans lequel chacun des dispositifs clients est authentifié de façon sûre au sein du groupe ; et
**caractérisé par**
un composant de service de partage de contenu qui fonctionne avec le composant de service de noms de domaine pour permettre à au moins un premier des dispositifs clients au sein du groupe d'accéder à un contenu informationnel associé à au moins un second des dispositifs clients du groupe sur la base, au moins en partie, du localisateur universel de ressources unique du au moins second des dispositifs clients du groupe ;
dans lequel un contenu associé à chacun des dispositifs qui est généré de façon privée relativement au groupe peut être transféré librement entre chacun des dispositifs du groupe ; et
dans lequel un contenu qui est généré autrement que de façon privée relativement aux dispositifs du groupe peut être transféré au sein du groupe selon des règles d'accès au contenu qui y sont associées.

2. Système selon la revendication 1, dans lequel le système comprend un interréseau privé qui fonctionne selon le protocole Internet.

3. Système selon la revendication 1, dans lequel le groupe est accessible de façon sûre aux dispositifs clients depuis un réseau qui est externe au groupe.

4. Système selon la revendication 1, dans lequel chaque dispositif client du groupe est accessible librement à chacun des autres dispositifs clients depuis l'intérieur du groupe.

5. Système selon la revendication 1, dans lequel le localisateur universel de ressources identifie en outre le contenu informationnel associé à chacun des dispositifs clients du groupe.

6. Procédé, comprenant les étapes consistant à :
maintenir, avec un composant de service de noms de domaine (111) qui fonctionne de façon privée relativement à un groupe de dispositifs clients, un localisateur universel de ressources unique qui identifie de façon privée chacun des dispositifs clients (102, 103, 104, 109) au sein du groupe ;
identifier, avec le localisateur universel de ressources, une hiérarchie de domaines privés qui est appliquée au sein du groupe et qui, du moins implicitement, représente des relations privées à l'intérieur entre les dispositifs clients du groupe ;
dans lequel des règles de réseau sont appliquées sur le groupe sur la base d'un ou plusieurs des relations privées ou des domaines privés ; et
dans lequel chacun des dispositifs clients est authentifié de façon sûre au sein du groupe ; et
**caractérisé par**
le fait de permettre, avec un composant de service de partage de contenu qui fonctionne avec le composant de service de noms de domaine, à au moins un premier des dispositifs clients du groupe d'accéder à un contenu informationnel associé à au moins un second des dispositifs clients du groupe sur la base, au moins en partie, du localisateur universel de ressources unique du au moins second des dispositifs clients du groupe ;
dans lequel un contenu associé à chacun des dispositifs qui est généré de façon privée relativement au groupe peut être transféré librement entre chacun des dispositifs du groupe ; et
dans lequel un contenu qui est généré autrement que de façon privée relativement aux dispositifs du groupe peut être transféré au sein du groupe selon des règles d'accès au contenu qui y sont associées.

7. Support de stockage lisible par ordinateur comprenant des instructions qui, lorsqu'elles sont exécutées avec un ou plusieurs processeurs d'un ou plusieurs ordinateurs :
configurent un système selon l'une quelconque des revendications 1 à 5 ; ou
amènent ou commandent les un ou plusieurs ordinateurs à/pour effectuer un processus qui concerne un procédé selon la revendication 6.

8. Utilisation pour un système informatique, comprenant :
la configuration d'un système selon l'une quelconque des revendications 1 à 5 ; ou
l'exécution d'un processus qui concerne un procédé selon la revendication 6.
